# EUROPEAN PATENT APPLICATION

(11) **EP 4 825 793 A1**
(43) Date of publication of application: **21.10.2026**
(21) Application number: 25170811.1
(22) Date of filing: 15.04.2025
(51) Int. Cl.: C01B 3/04

(54) **PROCESS FOR PRODUCING A HYDROGEN PRODUCT**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: GUPTA, Ankit, 60439 Frankfurt am Main (DE); PROST, Laurent, 60439 Frankfurt am Main (DE); KNOEDL, Dominik, 60439 Frankfurt am Main (DE); ULBER, Dieter, 60439 Frankfurt am Main (DE)
(74) Representative: Air Liquide

(57) **Abstract**

Process for producing a hydrogen product from an ammonia feed stream (2), the process comprising the following steps:
- introducing the ammonia feed stream (2), or a gas derived therefrom, into a cracker unit (3) for performing a cracking reaction of said stream into a cracked gas (4) comprising hydrogen and nitrogen,
- cooling at least a portion of the cracked gas (4) in a cracked gas cooler (6) by heat exchange with a at least a portion of the ammonia feed stream (2),
- directing a controllable portion (7) of the cracked gas (4) through a cracked gas cooler bypass (15), thus diverting said controllable portion (7) from the cracked gas cooler (6).

## Description

In recent times there has been an increased interest in NH3 as an energy carrier to produce Green/Low carbon Hydrogen by cracking Green/Blue ammonia. The NH3 cracking plants are in general quite Opex intensive due to the high ammonia feed cost. There is therefore a strong drive to enhance overall plant efficiency and achieve as low as possible NH3 consumption per Hydrogen produced.

In case of NH3 cracking catalysts there is a considerable drop in conversion between the start of run SOR and the end of run EOR conditions. This usually results in an increased specific NH3 consumption for end of run EOR conditions compared to start of run SOR conditions, thereby impacting the overall plant economics.

Ports and Terminals are anticipated to be the key locations for NH3 crackers. The NH3 crackers therefore need to be designed for net zero steam export due to lack of any potential steam consumer in the complex. Unlike the conventional steam reforming hydrogen plants, steam is not a reactant in the NH3 cracking process. However, producing steam in the process leads to easier and faster control of the plant. Therefore a control mechanism of the steam production is required to close the steam balance for the different load cases and different catalyst run conditions without compromising on overall efficiency, as efficiency is key for NH3 cracking units.

The present invention disclosure proposes a design to enhance controllability while allowing net zero steam export for the different load cases and different catalyst run conditions without compromising on overall efficiency.

For this purpose, the invention proposes a process for producing a hydrogen product from an ammonia feed stream, the process comprising the following steps:
- providing an ammonia feed stream through an ammonia feed duct,
- introducing the ammonia feed stream, or a gas derived therefrom, into a cracker unit for performing a cracking reaction of said stream into a cracked gas comprising hydrogen and nitrogen,
- cooling at least a portion of the cracked gas in a cracked gas cooler by heat exchange with a at least a portion of the ammonia feed stream,
- directing a controllable portion of the cracked gas through a cracked gas cooler bypass, thus diverting said controllable portion from the cracked gas cooler,
- or directing a controllable portion of the ammonia feed stream a cracked gas cooler bypass, thus diverting said controllable portion from the cracked gas cooler.

In the following description, an embodiment of the invention is described wherein a controllable portion of the cracked gas is directed through a cracked gas cooler bypass, thus diverting said controllable portion from the cracked gas cooler.

In another embodiment of the invention, a controllable portion of the ammonia feed stream is directed through a cracked gas cooler bypass, thus diverting said controllable portion from the cracked gas cooler.

The process may comprise at least one of the following features, taken independently or in combination:

The process comprises a step of mixing said portion of the cracked gas directed through the cracked gas cooler bypass with said portion of the cracked gas cooled in the cracked gas cooler, thus obtaining a cooled cracked gas.

The invention allows a varying proportion of the cracked gas being directed through the cracked gas cooler and thus exchanging heat with the ammonia feed stream, for example between the start of run and the end of run of the cracker unit.

In particular, the proportion of the cracked gas being directed through the cracked gas cooler bypass is higher at the start of run than at the end of run of the cracker unit.

The invention allows a variation of the heat input through the cracked gas cooler by adjusting the by-pass flow of the cracked gas through the cracked gas cooler.

The invention thus allows to adjust the cracker unit inlet temperature by adjusting the heat input through the cracked gas cooler.

The cracker unit inlet temperature varies with the catalyst run conditions in order to maintain the conversion rate of the ammonia feed stream.

In particular, cracker unit inlet temperature is lower at the Start of Run than at the End of run of the cracker unit.

The process comprises a step of generating steam by recovering waste heat from a process stream from the cracker unit. This is advantageously performed by vaporizing a water stream in heat exchange with the process stream.

The step of generating the steam is performed in a boiler.

In particular, said process stream comprises the cracked gas, in particular the cracked gas upstream the cracked gas cooler.

Advantageously, the step of generating steam by recovering waste heat from a process stream from the cracker unit allows to rapidly and easily control the cracker unit outlet temperature or compensate for a shifted temperature profile of the plant, in particular allows to maintain a fixed cracker unit outlet temperature.

The quantity of steam generated can vary with the catalyst run conditions, a load of the plant or different steam consumers of the plant, such as a distillation column or an ammonia vaporizer.

The process comprises a step of storing the generated steam in a steam drum.

The process comprises a step of vaporizing the ammonia feed stream, in particular in an ammonia vaporizer.

The portion of the ammonia feed stream exchanging heat in the cracked gas cooler and the controllable portion of the ammonia feed stream directed through the cracked gas cooler bypass comprise the ammonia feed stream being vaporized.

In particular, the cracked gas cooler is arranged downstream the vaporizer in the direction of the ammonia feed stream flow.

The step of vaporizing the ammonia feed stream comprises vaporizing the ammonia feed stream by heat exchange with the generated steam.

The step of vaporizing the ammonia feed stream comprises vaporizing the ammonia feed stream by heat exchange with the generated steam and with the cooled cracked gas.

The step of vaporizing the ammonia feed stream comprises heating up the ammonia feed stream by heat exchange with the cooled cracked gas and vaporizing the thus heated up ammonia feed stream in the ammonia vaporizer by exchanging heat with the generated steam.

This advantageously allows to indirectly vary a heat input from the cooled cracked gas to the ammonia vaporizer. In particular, said step of heating up is performed below the saturation temperature of the ammonia feed stream.

The invention allows to control the heat input to the ammonia vaporizer through the cracked gas, and the heat input to the ammonia vaporizer from the generated steam.

The invention thus allows to control the heat input to the ammonia vaporizer, and allows closing the steam balance between an amount of steam generated for the required cooling of the process stream and an amount of steam used for vaporizing the ammonia feed stream, thus allowing zero steam export.

The term "steam consumption" is defined as a recovery of the latent and/or sensible heat from said steam generated.

In particular, the whole generated steam is condensed, thus guaranteeing a net zero steam export from the process.

The proportion of the generated steam consumed by the ammonia vaporizer varies with the quantity of heat carried by the cooled cracked gas fed to the ammonia vaporizer or used for performing said heating up of the ammonia feed stream.

The quantity of heat carried by the cooled cracked gas to the ammonia vaporizer varies with the portion of the cracked gas fed to the cracked gas cooler and exchanging heat with the ammonia feed stream.

The process comprises a step of adjusting the portion of the cracked gas directed through the cracked gas cooler bypass, and the portion of the cracked gas fed to the cracked gas cooler and exchanging heat with the ammonia feed stream.

The process comprises a step of adjusting the temperature of the cooled cracked gas by adjusting the portion of the cracked gas exchanging heat with the ammonia feed stream.

The process comprises a step of adjusting the proportion of said generated steam consumed by the ammonia vaporizer by adjusting the portion of the cracked gas stream exchanging heat with the ammonia feed stream, and thus the heat input from the cooled cracked gas to the vaporizing step.

The process comprises a step of increasing the proportion of the said generated steam consumed by the ammonia vaporizer and decreasing the proportion of the cracked gas being directed through the cracked gas cooler bypass.

The step of adjusting the proportion of the cracked gas directed through the cracked gas cooler bypass allows maintaining a net zero steam export from the installation for the different load cases and different catalyst run conditions by adjusting the portion of the cracked gas exchanging heat with the ammonia feed stream.

Advantageously, the invention allows to adapt the control of the process stream temperature to the load of the installation or to the catalyst run conditions with the vaporization of a water stream, while maintaining a net zero steam export.

The process comprises a step of exhausting a flue gas stream from the cracker unit through a flue gas duct.

The process comprises a step of feeding an oxidant stream through an oxidant feed duct to the cracker unit for performing a combustion as a heat input to the cracking reaction.

Air or a gas having greater than 50 percent oxygen concentration, and in some cases preferably greater than 90 percent oxygen may be used as the oxidant stream.

The process comprises at least one step of preheating the oxidant stream by recovering waste heat from the flue gas stream. Said step is in particular performed in at least one oxidant preheater coil arranged in heat exchange relationship with the flue gas duct.

The step of preheating the oxidant stream comprises a first step of preheating the oxidant stream performed in a first oxidant preheater coil and a second step of preheating the oxidant stream performed in a second oxidant preheater coil.

The first step of preheating the oxidant stream is performed downstream the second step of preheating the oxidant stream in the direction of the flue gas stream flow.

The process comprises a step of preheating the ammonia feed stream by recovering waste heat from the flue gas stream. Said step of preheating the ammonia feed stream is in particular performed in an ammonia preheater arranged in heat exchange relationship with the flue gas duct. Said step of preheating the ammonia feed stream is advantageously performed upstream the step of vaporizing the ammonia feed stream in the direction of the ammonia feed stream.

The process comprises a step of superheating the vaporized ammonia stream by recovering waste heat from the flue gas stream, performed in a feed superheater placed in heat exchange with the flue gas duct.

The step of preheating the ammonia feed stream and/or the step of superheating the vaporized ammonia stream is performed downstream the step of preheating the oxidant stream, in particular downstream the first step of preheating the oxidant stream in the direction of the flue gas flow.

Advantageously, preheating the ammonia feed stream and superheating the ammonia feed stream being vaporized downstream the preheating of the oxidant stream in the direction of the flue gas allows a low-grade heat recovery from the flue gas, thus enabling lower flue gas exhaust temperature and a better overall efficiency.

The process comprises a step of diverting a controllable portion of the ammonia feed stream being vaporized from the feed superheater through a superheater bypass.

The step of diverting a controllable portion of the ammonia feed stream from the feed superheater allows to control the portion of the ammonia being superheated by recovering heat from the flue gas, for instance depending on the temperature at the outlet of the flue gas duct.

Advantageously, diverting a portion of the ammonia feed stream from the superheater allows to maintain the temperature inside the flue gas duct high enough to prevent any water condensation inside the flue gas duct.

Advantageously, diverting a portion of the vaporized ammonia from the superheater allows to avoid any water condensation of the flue gas without requiring a bypass on the ammonia preheater.

The step of superheating the vaporized ammonia stream is performed upstream the step of cooling the cracked gas by heat exchange with a first portion of the ammonia feed stream in the direction of the ammonia feed stream flow.

The process comprises a step of performing a reaction of ammonia pre-cracking downstream the step of cooling at least a portion of the cracked gas in said cracked gas cooler in the direction of the ammonia feed stream.

The step of performing a reaction of ammonia pre-cracking of the vaporized ammonia stream is performed in a pre-cracker, thus producing a partially converted ammonia stream as a gas derived from the ammonia feed stream.

The step of performing a reaction of ammonia pre-cracking is performed downstream the step of vaporizing the ammonia feed stream, in particular downstream step of superheating the vaporized ammonia stream, in particular downstream the step of cooling the cracked gas by heat exchange with a first portion of the ammonia feed stream, in the direction of the ammonia feed stream.

The step of performing a reaction of ammonia pre-cracking comprises a step of preheating the ammonia feed stream by recovering waste heat from the flue gas stream in a pre-cracker preheater coil arranged in heat exchange relationship with the flue gas duct.

The process comprises at least one step of heating the ammonia feed stream, or a gas derived from the ammonia feed stream, downstream the cracked gas cooler.

The gas derived from the ammonia feed stream can for example be the partially converted ammonia feed stream, or any other gas derived from the ammonia feed stream.

Said step of heating the ammonia feed stream, or a gas derived from the ammonia feed stream, downstream the cracked gas cooler is performed by recovering waste heat from the flue gas stream in at least one superheater coil arranged in heat exchange relationship with the flue gas duct, upstream said step of introducing the heated stream into the cracker unit.

The process comprises in particular:
- a first step of heating the ammonia feed stream, or a gas derived from the ammonia feed stream, downstream the cracked gas cooler performed in a first superheater coil,
- a second step of heating the ammonia feed stream, or a gas derived from the ammonia feed stream, downstream the cracked gas cooler in a second superheater coil.

The first step of heating the ammonia feed stream downstream the cracked gas cooler is performed upstream the second step of heating the ammonia feed stream downstream the cracked gas cooler in the direction of the ammonia feed stream.

The first step of heating the ammonia feed stream is performed downstream the second step of heating the ammonia feed stream in the direction of the flue gas stream.

The second step of preheating the oxidant stream is performed downstream the second step of heating the ammonia feed stream in the direction of the flue gas stream, and in particular downstream the step of preheating the ammonia feed stream in the pre-cracker preheater coil.

In particular, the second step of preheating the oxidant stream is performed between the first and the second step of heating the ammonia feed stream, in the direction of the flue gas stream.

Advantageously, performing the second step of preheating the oxidant stream downstream the step of preheating the ammonia feed stream in the pre-cracker preheater coil and/or downstream the second step of heating the ammonia feed stream downstream the cracked gas cooler minimizes the impact on the cracker unit and/or pre-cracker inlet temperature.

The process comprises a step of diverting a portion of the oxidant stream from the second oxidant preheater coil and directing the diverted portion to the cracker unit through a bypass of the second oxidant preheater coil.

Advantageously, this bypass allows to maintain a sufficient temperature of the flue gas inside the flue gas duct for the heat exchange coils placed downstream the second oxidant preheater coil, in particular when the installation is not operating at full load.

Advantageously, the separated first and second step of heating the ammonia feed stream or first and second step of heating the partially converted ammonia stream allow to maintain a sufficient temperature to perform the second step of preheating of the oxidant feed stream in the second oxidant preheater coil arranged between the first and second superheater coils.

All of the steam produced by the installation may be produced by recovering heat from the cracker unit in the boiler.

In particular, the process does not generate any steam by recovering waste heat from the flue gas.

Advantageously, the use of any combination of:
- the step of preheating the oxidant stream in the at least one oxidant preheater coil,
- the step of preheating the ammonia feed stream in the ammonia preheater,
- the step of superheating the vaporized ammonia stream in the feed superheater,
- the step of preheating the ammonia stream in the pre-cracker preheater coil,
- the step of heating ammonia feed stream in at least one superheater coil,
allows to recover the heat from the flue gas duct without any steam generation, thus reducing overall steam production by the process.

The process comprises a step of recovering hydrogen from the cracked gas, in particular the cooled cracked gas, more particularly the cooled cracked gas having exchanged heat with the ammonia feed stream during said step of vaporizing the ammonia feed stream, thus obtaining a purified hydrogen stream.

The invention also proposes an installation for producing a hydrogen product from an ammonia feed stream, said installation comprising:
- a cracker unit for performing a cracking reaction of said ammonia feed stream into a cracked gas comprising hydrogen and nitrogen,
- a cracked gas cooler arranged for cooling at least a portion of said cracked gas by heat exchange with at least a portion of the ammonia feed stream,
- a cracked gas cooler bypass arranged :
   - to divert a controllable portion of the cracked gas from the cracked gas cooler,
   - or to divert a controllable portion of the ammonia feed stream from the cracked gas cooler.

The installation may comprise at least one of the following features, taken independently or in combination:

The cracked gas cooler bypass is arranged to mix the portion of the cracked gas diverted from the cracked gas cooler with the portion of the cracked gas cooled in the cracked gas cooler, thus obtaining a cooled cracked gas.

The installation comprises a boiler arranged to generate steam by recovering waste heat from a process stream from the cracker unit.

In particular, the steam is generated by vaporizing a water stream in heat exchange with the process stream.

In particular, the boiler is arranged to generate steam by recovering waste heat from the cracked gas, in particular from the cracked gas upstream the cracked gas cooler.

The installation comprises a steam drum for storing the steam produced by the boiler.

The installation comprises an ammonia vaporizer arranged to vaporize the ammonia feed stream.

In particular, the cracked gas cooler is arranged downstream the vaporizer in the direction of the ammonia feed stream flow.

The ammonia vaporizer is arranged to vaporize the ammonia feed stream by exchanging heat with the cooled cracked gas and/or with the generated steam.

In a first embodiment, the ammonia vaporizer is arranged to heat up the ammonia feed stream by heat exchange with the cooled cracked gas and to vaporize the thus heated up ammonia feed stream by exchanging heat with the generated steam.

In another embodiment, the installation comprises a cooled cracked gas preheater arranged to heat up the ammonia feed stream upstream the ammonia vaporizer in heat exchange with the cooled cracked gas from the cracked gas cooler.

The ammonia vaporizer is then arranged to vaporize the heated up ammonia feed stream by exchanging heat with the generated steam.

The ammonia vaporizer is arranged to vaporize said ammonia feed stream by consuming at least a portion of the generated steam.

The cracked gas cooler bypass is arranged to adjust the portion of the cracked gas directed through the cracked gas cooler bypass, and the portion of the cracked gas fed to the cracked gas cooler and exchanging heat with the ammonia feed stream.

In particular, the cracked gas cooler bypass is arranged to adjust the temperature of the cooled cracked gas by adjusting the portion of the cracked gas exchanging heat with the ammonia feed stream, and thus the heat input from the cracked gas to the cracked gas cooler.

The cracked gas cooler bypass is arranged to adjust the proportion of said generated steam consumed by the ammonia vaporizer by adjusting the portion of the cracked gas stream exchanging heat with the ammonia feed stream, and thus the heat input from the cracked gas to the cracked gas cooler.

The cracked gas cooler bypass is arranged to maintain a net zero steam export from the installation for the different load cases and different catalyst run conditions by adjusting the portion of the cracked gas exchanging heat with the ammonia feed stream.

Advantageously, the invention allows to adapt the control of the cracker unit to the load of the installation or to the catalyst run conditions with the vaporization of a water stream, while maintaining a net zero steam export from the installation.

The installation comprises a flue gas duct arranged to exhaust a flue gas stream from the cracker unit.

The installation comprises an oxidant feed duct arranged to feed an oxidant stream to the cracker unit for performing said cracking reaction of the ammonia feed stream.

The oxidant feed duct comprises at least one oxidant preheater coil, placed in heat exchange with the flue gas duct and arranged to preheat the oxidant stream by recovering waste heat from the flue gas stream.

The oxidant feed duct comprises a first oxidant preheater coil and a second oxidant preheater coil, the second oxidant preheater coil being placed downstream the oxidant feed duct in the direction of the oxidant stream.

The second oxidant preheater coil is placed in heat exchange with the flue gas duct upstream the first oxidant preheater coil in the direction of the flue gas stream.

The installation comprises an ammonia feed duct arranged for the circulation of the ammonia feed stream.

The ammonia feed duct comprises an ammonia preheater placed in heat exchange with the flue gas duct and arranged to preheat the ammonia feed stream by recovering waste heat from the flue gas stream.

The ammonia feed duct comprises a feed superheater in heat exchange with the flue gas duct and arranged for superheating a vaporized ammonia stream from the ammonia vaporizer by recovering waste heat from the flue gas stream.

The ammonia preheater is placed upstream the ammonia vaporizer in the direction of the ammonia feed stream.

The feed superheater is placed downstream the ammonia vaporizer in the direction of the ammonia feed stream.

The ammonia preheater and/or the feed superheater are placed in heat exchange with the flue gas duct downstream the first oxidant preheater coil in the direction of the flue gas.

Advantageously, placing the ammonia preheater and the feed superheater downstream the first oxidant preheater coil allows a low-grade heat recovery from the flue gas, thus enabling lower flue gas exhaust temperature and a better overall efficiency.

The installation comprises a feed superheater bypass arranged to divert a controllable portion of the vaporized ammonia stream from the feed superheater.

The feed superheater bypass is arranged to control the portion of the vaporized ammonia being superheated by recovering heat from the flue gas depending on the temperature at the outlet of the flue gas duct.

Advantageously, the feed superheater bypass allows to avoid any water condensation of the flue gas without requiring a bypass on the ammonia preheater.

The feed superheater is placed upstream the cracked gas cooler in the direction of the ammonia feed stream.

The installation comprises a pre-cracker arranged for receiving the ammonia feed stream and to perform a reaction of ammonia pre-cracking, thus producing a partially converted ammonia stream.

The pre-cracker is placed downstream the ammonia vaporizer, in particular downstream the feed superheater, in particular downstream the cracked gas cooler, in the direction of the ammonia feed stream.

The pre-cracker comprises a pre-cracker preheater coil placed in heat exchange with the flue gas duct and arranged to preheat the ammonia feed stream by recovering waste heat from the flue gas stream.

The installation comprises at least one superheater coil arranged in heat exchange relationship with the flue gas duct and arranged to heat the ammonia feed stream downstream the cracked gas cooler or heat the partially converted ammonia stream by recovering waste heat from the flue gas stream.

In particular, the installation comprises a first superheater coil and a second superheater coil.

The first superheater coil is placed upstream the second superheater coil in the direction of the ammonia feed stream.

The first superheater coil is placed in heat exchange with the flue gas duct downstream the second superheater coil in the direction of the flue gas stream.

The hot oxidant preheater coil is placed downstream the pre-cracker preheater coil and downstream the second superheater coil in the direction of the flue gas stream.

In particular, the hot oxidant preheater coil is placed between the first superheater coil and the second superheater coil in the direction of the flue gas stream.

Advantageously, placing the hot oxidant preheater coil downstream the pre-cracker preheater coil and downstream the second superheater coil allows to limit the impact on the cracker unit and pre-cracker inlet temperature.

The installation comprises a bypass arranged to divert a portion of the oxidant stream from the second oxidant preheater coil and to direct the diverted portion to the cracker unit.

Advantageously, this hot oxidant preheater coil bypass allows to maintain a sufficient temperature of the flue gas inside the flue gas duct for the heat exchange coils placed downstream the hot oxidant preheater coil, in particular when the installation is not operating at full load.

Advantageously, separated first and a second superheater coils allow to maintain a sufficient temperature for the preheating of the oxidant feed stream in the hot oxidant preheater coil.

The cracked gas boiler produces all of the steam produced by the installation.

In particular, the installation does not use any flue gas boiler generating steam by recovering energy from the flue gas.

Advantageously, the use of any combination of:
- the at least one oxidant preheater coils,
- the ammonia preheater,
- the feed superheater,
- the pre-cracker preheater coil,
- the at least one superheater coil,
allows to recover the heat from the flue gas duct without any steam generation, thus reducing overall steam production by the installation.

The installation comprises a hydrogen recovery unit for recovering hydrogen from the cracked gas having exchanged heat with the ammonia feed stream during said step of vaporizing the ammonia feed stream. The hydrogen recovery unit may be a pressure swing adsorption unit, a cryogenic separation unit, etc.

Further features, details and advantages of the invention will become more clearly apparent from reading the description given below by way of indication with reference to the drawings, in which:
[Fig 1] is a schematic view of the installation according to a first embodiment of the invention,
[Fig 2] is a schematic view of the installation according to a second embodiment of the invention,

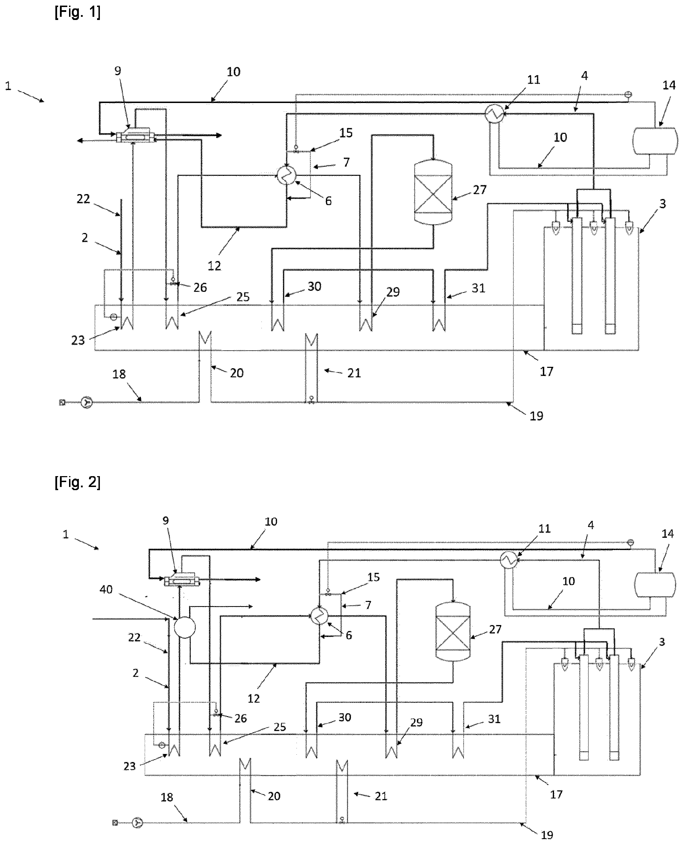

The figure 1 is a schematic view of the installation 1 for producing a hydrogen product from an ammonia feed stream 2.

The installation 1 comprises:
- a cracker unit 3 for performing a cracking reaction of said ammonia feed stream 2 into a cracked gas 4 comprising hydrogen and nitrogen,
- a cracked gas cooler 6 arranged for cooling at least a portion of said cracked gas 4 by heat exchange with at least a portion of the ammonia feed stream 2,
- a cracked gas cooler bypass 15 arranged to divert a controllable portion 7 of the cracked gas 4 from the cracked gas cooler 6,

In an embodiment not represented, the cracked gas cooler is arranged to divert a controllable portion of the ammonia feed stream (2) 2 from the cracked gas cooler 6.

The recovery of hydrogen from the cracked gas may be performed by pressure swing adsorption or by cryogenics, for example by cryogenics using cold from the liquid ammonia feed stream 2. The cold liquid ammonia feed stream 2 may also be used to liquefy said purified hydrogen stream.

The hydrogen product can be cooled further down by heat exchange against a cold liquid ammonia in a simple heat exchanger or in a refrigeration chiller with a refrigeration system, not represented in the figures.

The cracked gas cooler bypass 15 is arranged to mix the portion 7 of the cracked gas 4 diverted from the cracked gas cooler 6 with the portion of the cracked gas 4 cooled in the cracked gas cooler 6, thus obtaining a cooled cracked gas 12.

The installation comprises a boiler 11 arranged to generate steam by recovering waste heat from a process stream from the cracker unit 3 by vaporizing a water stream in heat exchange with the process stream.

The boiler 11 is arranged to generate steam by recovering waste heat from the cracked gas 4 upstream the cracked gas cooler 6.

The installation comprises a steam drum 14 for storing the steam produced by the boiler 11.

The installation comprises an ammonia vaporizer 9 arranged to vaporize the ammonia feed stream 2.

The cracked gas cooler 6 is arranged downstream the vaporizer in the direction of the ammonia feed stream 2 flow.

The ammonia vaporizer 9 is arranged to vaporize the ammonia feed stream 2 by exchanging heat with the cooled cracked gas 12 and with the generated steam 10.

In this first embodiment, the ammonia vaporizer 9 is arranged to heat up the ammonia feed stream 2 by heat exchange with the cooled cracked gas 12 and to vaporize the thus heated up ammonia feed stream 2 by exchanging heat with the generated steam 10.

The ammonia vaporizer 9 is arranged to vaporize said ammonia feed stream 2 by consuming at least a portion of the generated steam 10.

The cracked gas cooler bypass 15 is arranged to adjust the portion 7 of the cracked gas 4 directed through the cracked gas cooler bypass 15, and the portion of the cracked gas 4 fed to the cracked gas cooler 6 and exchanging heat with the ammonia feed stream 2.

In particular, the cracked gas cooler bypass 15 is arranged to adjust the temperature of the cooled cracked gas 12 by adjusting the portion of the cracked gas 4 exchanging heat with the ammonia feed stream 2, and thus the heat input from the cracked gas 4 to the cracked gas cooler 6.

The cracked gas cooler bypass 15 is arranged to adjust the proportion of said generated steam 10 consumed by the ammonia vaporizer 9 by adjusting the portion of the cracked gas 4 stream exchanging heat with the ammonia feed stream 2, and thus the heat input from the cracked gas 4 to the cracked gas cooler 6.

The cracked gas cooler bypass 15 is arranged to maintain a net zero steam export from the installation for the different load cases and different catalyst run conditions by adjusting the portion of the cracked gas 4 exchanging heat with the ammonia feed stream 2.

Advantageously, the invention allows to adapt the control of the cracker unit 3 to the load of the installation or to the catalyst run conditions with the vaporization of a water stream, while maintaining a net zero steam export from the installation.

The installation comprises a flue gas duct 17 arranged to exhaust a flue gas stream from the cracker unit 3.

The installation comprises an oxidant feed duct 18 arranged to feed an oxidant stream 19 to the cracker unit 3 for performing said cracking reaction of the ammonia feed stream 2.

The oxidant feed duct 18 comprises a first oxidant preheater coil 20 and a second oxidant preheater coil 21 placed in heat exchange with the flue gas duct 17 and arranged to preheat the oxidant stream 19 by recovering waste heat from the flue gas stream.

The second oxidant preheater coil 21 is placed downstream the oxidant feed duct 18 in the direction of the oxidant stream 19.

The second oxidant preheater coil 21 is placed in heat exchange with the flue gas duct 17 upstream the first oxidant preheater coil 20 in the direction of the flue gas stream.

The installation comprises an ammonia feed duct 22 arranged for the circulation of the ammonia feed stream 2.

The ammonia feed duct 22 comprises an ammonia preheater 23 placed in heat exchange with the flue gas duct 17 and arranged to preheat the ammonia feed stream 2 by recovering waste heat from the flue gas stream.

The ammonia feed duct 22 comprises a feed superheater 25 in heat exchange with the flue gas duct 17 and arranged for superheating a vaporized ammonia stream from the ammonia vaporizer 9 by recovering waste heat from the flue gas stream.

The ammonia preheater 23 is placed upstream the ammonia vaporizer 9 in the direction of the ammonia feed stream 2.

The feed superheater 25 is placed downstream the ammonia vaporizer 9 in the direction of the ammonia feed stream 2.

The ammonia preheater 23 and/or the feed superheater 25 are placed in heat exchange with the flue gas duct 17 downstream the first oxidant preheater coil 20 in the direction of the flue gas.

Advantageously, placing the ammonia preheater 23 and the feed superheater 25 downstream the first oxidant preheater coil 20 allows a low-grade heat recovery from the flue gas, thus enabling lower flue gas exhaust temperature and a better overall efficiency.

The installation comprises a feed superheater 25 bypass arranged to divert a controllable portion of the vaporized ammonia stream from the feed superheater 25.

The feed superheater 25 bypass is arranged to control the portion of the vaporized ammonia being superheated by recovering heat from the flue gas depending on the temperature at the outlet of the flue gas duct 17.

Advantageously, the feed superheater 25 bypass allows to avoid any water condensation of the flue gas without requiring a bypass on the ammonia preheater 23.

The feed superheater 25 is placed upstream the cracked gas cooler 6 in the direction of the ammonia feed stream 2.

The installation comprises a pre-cracker 27 arranged for receiving the ammonia feed stream 2 and to perform a reaction of ammonia pre-cracking, thus producing a partially converted ammonia stream.

The pre-cracker 27 is placed downstream the ammonia vaporizer 9, downstream the feed superheater 25, and downstream the cracked gas cooler 6, in the direction of the ammonia feed stream 2.

The pre-cracker 27 comprises a pre-cracker preheater coil 29 placed in heat exchange with the flue gas duct 17 and arranged to preheat the ammonia feed stream 2 by recovering waste heat from the flue gas stream.

The installation comprises a first superheater coil 30 and a second superheater coil 31 arranged in heat exchange relationship with the flue gas duct 17 and arranged to heat the ammonia feed stream 2 downstream the cracked gas cooler 6 or heat the partially converted ammonia stream by recovering waste heat from the flue gas stream.

The first superheater coil 30 is placed upstream the second superheater coil 31 in the direction of the ammonia feed stream 2.

The first superheater coil 30 is placed in heat exchange with the flue gas duct 17 downstream the second superheater coil 31 in the direction of the flue gas stream.

The hot oxidant preheater coil is placed downstream the pre-cracker preheater coil 29 and downstream the second superheater coil 31, between the first superheater coil 30 and the second superheater coil 31 in the direction of the flue gas stream.

Advantageously, placing the hot oxidant preheater coil downstream the pre-cracker preheater coil 29 and downstream the second superheater coil 31 allows to limit the impact on the cracker unit 3 and pre-cracker 27 inlet temperature.

The installation comprises a bypass arranged to divert a portion of the oxidant stream 19 from the second oxidant preheater coil 21 and to direct the diverted portion to the cracker unit 3.

Advantageously, this hot oxidant preheater coil bypass allows to maintain a sufficient temperature of the flue gas inside the flue gas duct 17 for the heat exchange coils placed downstream the hot oxidant preheater coil, in particular when the installation is not operating at full load.

Advantageously, separated first 30 and a second 31 superheater coils allow to maintain a sufficient temperature for the preheating of the oxidant feed stream in the hot oxidant preheater coil.

The cracked gas 4 boiler 11 produces all of the steam produced by the installation.

The installation does not use any flue gas boiler 11 generating steam by recovering energy from the flue gas.

Advantageously, the use of any combination of:
- the oxidant preheater coils,
- the ammonia preheater 23,
- the feed superheater 25,
- the pre-cracker preheater coil 29,
- the superheater coils 30,31 ,
allows to recover the heat from the flue gas duct 17 without any steam generation, thus reducing overall steam production by the installation.

The installation comprises a hydrogen recovery unit for recovering hydrogen from the cracked gas 4 having exchanged heat with the ammonia feed stream 2 during said step of vaporizing the ammonia feed stream 2. The hydrogen recovery unit may be a pressure swing adsorption unit, a cryogenic separation unit, etc...

The figure 2 is a schematic view of the installation according to a second embodiment of the invention, wherein the installation comprises a cooled cracked gas preheater 40 arranged to heat up the ammonia feed stream 2 upstream the ammonia vaporizer 9 in heat exchange with the cooled cracked gas 12 from the cracked gas cooler 6.

The ammonia vaporizer 9 is then arranged to vaporize the heated up ammonia feed stream 2 by exchanging heat with the generated steam 10.

## Claims

1. Process for producing a hydrogen product from an ammonia feed stream (2), the process comprising the following steps:
- providing an ammonia feed stream (2) through an ammonia feed duct (22),
- introducing the ammonia feed stream (2), or a gas derived therefrom, into a cracker unit (3) for performing a cracking reaction of said stream into a cracked gas (4) comprising hydrogen and nitrogen,
- cooling at least a portion of the cracked gas (4) in a cracked gas cooler (6) by heat exchange with a at least a portion of the ammonia feed stream (2),
- directing a controllable portion (7) of the cracked gas (4) through a cracked gas cooler bypass (15), thus diverting said controllable portion (7) from the cracked gas cooler (6),
- or directing a controllable portion of the ammonia feed stream (2) a cracked gas cooler bypass (15), thus diverting said controllable portion (7) from the cracked gas cooler (6).

2. Process according to the preceding claim, comprising a step of mixing said portion of the cracked gas (4) directed through the cracked gas cooler bypass (15) with said portion of the cracked gas (4) cooled in the cracked gas cooler (6), thus obtaining a cooled cracked gas (12).

3. Process according to any of the preceding claims, comprising a step of generating steam by recovering waste heat from a process stream from the cracker unit (3).

4. Process according to claim 3, wherein the process stream comprises the cracked gas (4), in particular the cracked gas (4) upstream the cracked gas cooler (6).

5. Process according to any of the preceding claims, comprising a step of vaporizing the ammonia feed stream (2), in particular in an ammonia vaporizer (9).

6. Process according to the preceding claim in combination with claim 3 or 4, wherein the step of vaporizing the ammonia feed stream (2) comprises vaporizing the ammonia feed stream (2) by heat exchange with the generated steam (10).

7. Process according to the preceding claim in combination with claim 2, wherein the step of vaporizing the ammonia feed stream (2) comprises vaporizing the ammonia feed stream (2) by heat exchange with the generated steam (10) and with the cooled cracked gas (12).

8. Process according to claim 6 in combination with claim 2, wherein the step of vaporizing the ammonia feed stream (2) comprises heating up the ammonia feed stream (2) by heat exchange with the cooled cracked gas (12) and vaporizing the thus heated up ammonia feed stream (2) in the ammonia vaporizer (9) by exchanging heat with the generated steam (10).

9. Process according to claim 7 or 8, comprising a step of adjusting the proportion of said generated steam (10) consumed by the ammonia vaporizer (9) by adjusting the portion of the cracked gas (4) stream exchanging heat with the ammonia feed stream (2), and thus the heat input from the cooled cracked gas (12) to the vaporizing step.

10. Process according to any of the preceding claims, comprising a step of preheating the ammonia feed stream (2), or a gas derived the ammonia feed stream (2), upstream the step of vaporizing the ammonia feed stream (2) in the direction of the ammonia feed stream (2), by recovering waste heat from a flue gas stream.

11. Process according to any of the preceding claims, comprising a step of feeding an oxidant stream (19) through an oxidant feed duct to the cracker unit for performing a combustion as a heat input to the cracking reaction, the process comprising:
- a first step of heating the ammonia feed stream (2), or a gas derived from the ammonia feed stream (2), downstream the cracked gas cooler (6) performed in a first superheater coil (31) by recovering waste heat from the flue gas stream,
- a second step of heating the ammonia feed stream (2), or a gas derived from the ammonia feed stream (2), downstream the cracked gas cooler (6) in a second superheater coil (32) by recovering waste heat from the flue gas stream,
said process comprising at least one step of preheating the oxidant stream (19) by recovering waste heat from the flue gas stream, performed downstream said second step of heating the ammonia feed stream (2).

12. Process according to the preceding claim, wherein the step of preheating the oxidant stream (19) comprises a first step of preheating the oxidant stream (19) performed in a first oxidant preheater coil (20) and a second step of preheating the oxidant stream (19) performed in a second oxidant preheater coil (21), wherein the second step of preheating the oxidant stream (19) is performed between the first and the second step of heating the ammonia feed stream (2), in the direction of the flue gas stream.

13. Process according to any of the preceding claims in combination with claim 2, comprising a step of recovering hydrogen from the cooled cracked gas (4), thus obtaining a purified hydrogen stream.

14. Installation (1) for producing a hydrogen product from an ammonia feed stream (2), said installation (1) comprising:
- a cracker unit (3) for performing a cracking reaction of said ammonia feed stream (2) into a cracked gas (4) comprising hydrogen and nitrogen,
- a cracked gas cooler (6) arranged for cooling at least a portion of said cracked gas (4) by heat exchange with at least a portion of the ammonia feed stream (2),
- a cracked gas cooler bypass (15) arranged :
• to divert a controllable portion (7) of the cracked gas (4) from the cracked gas cooler (6),
• or to divert a controllable portion (7) of the ammonia feed stream (2) from the cracked gas cooler (6).
